# EUROPÄISCHE PATENTSCHRIFT

(11) **EP 1 655 684 B1**
(45) Veröffentlichungstag und Bekanntmachung des Hinweises auf die Patenterteilung: **07.11.2007**
(21) Anmeldenummer: 05019832.4
(22) Anmeldetag: 13.09.2005
(51) Int. Cl.: G06K 7/00

(54) **Lesegerät zum berührungslosen Lesen von Transponderdaten**
Reader for non-contact reading of transponder data
Lecteur sans contact pour lire des données à partir d'un transpondeur

(30) Priorität: 09.11.2004 DE 102004054341
(43) Veröffentlichungstag der Anmeldung: 10.05.2006
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Jahoda, Werner, 31542 Bad Nenndorf (DE)
(74) Vertreter: Körner, Peter

(56) Entgegenhaltungen:
- EP-A- 0 994 364
- EP-A- 1 376 446

## Beschreibung

Lesegeräte und Transponder werden zunehmend bei der Produktion, Lagerhaltung und Logistik von Gütern eingesetzt. Da gleichzeitig auf engem Raum auch andere elektrische oder elektronische Geräte, Maschinen und Anlagen betrieben werden, die selbst elektromagnetische Felder erzeugen, können Störungen beim Lesen von Transponderdaten auftreten.

Insbesondere bei passiven Transpondern, die ihre Energie vom Lesegerät beziehen, ist die Sendeleistung der Transponder klein und mit zunehmendem Abstand zwischen Transponder und Lesegerät können daher elektromagnetische Felder, die von benachbarten elektrischen oder elektronischen Geräten, Maschinen und Anlagen als Grundwelle oder Oberwelle abgestrahlt und direkt oder über Reflektionen empfangen werden, in derselben Größenordnung wie die Lesefeldstärke der Transponderdaten liegen.

Bei üblichen Lesengeräten, die lediglich die empfangenen Transponderdaten aufbereiten, kann die Zuverlässigkeit einer Übertragung annähernd dadurch abgeschätzt werden, dass fehlerhafte und gültige Übertragungen statistisch bewertet werden. Das ist aber für die Praxis unzureichend.

Ferner könnte mit einem Oszilloskop oder einem Spektrumanalyzer, an den eine Messantenne angeschlossen ist, die Feldstärke störender elektromagnetischer Felder am Einsatzort des Lesegerätes gemessen werden und durch Vergleich mit Erfahrungswerten die Zuverlässigkeit einer Übertragung abgeschätzt werden. Da ein Oszilloskop oder ein Spektrumanalyzer aber in ihrer Schaltungstechnik und Signalverarbeitung sowie die Messantenne in ihrer räumlichen Gestaltung anders aufgebaut sind als ein Lesegerät für Transponderdaten mit zugehöriger Leseantenne sind die Messergebnisse nicht unmittelbar vergleichbar. Das Oszilloskop oder der Spektrumanalyzer spiegeln daher nicht den gleichen Zustand wie ein Lesegerät für Transponderdaten wieder.

Eine weitere Möglichkeit bestünde darin, ein übliches Lesegerät mit freiliegender Schaltung einzusetzen und mit einem Oszilloskop oder einem Frequenzanalysator Signale an der freiliegenden Schaltung abzugreifen und auszuwerten. Aber auch eine solche Messvorrichtung wäre unzureichend, da durch den Anschluss des Oszilloskops oder Frequenzanalysators die Signale des Lesegerätes bedämpft und damit verfälscht werden und außerdem die Anschlussleitungen selbst als Antenne wirken und damit Störsignale einkoppeln können. Die Empfindlichkeit gegen so eingekoppelte Störsignale wächst mit zunehmender Frequenz und ist daher im HF-Bereich und besonders im UHF-Bereich und darüber relevant. Darüber hinaus können auch Komponenten des Oszilloskops oder Frequenzanalysators, wie Schaltnetzteile oder Monitorablenkschaltungen Störsignale abstrahlen.

Aus der EP-A-0 994 364 ist ein Verfahren zum Lesen von in einem Transponder gespeicherter Daten bekannt. Die Druckschrift befasst sich mit dem Problem, Störungen im empfangenen Signal, welche durch andere Geräte verursacht werden, zu kompensieren. Dazu wird mittels eines Signalprozessors das Spektrum der Störungen ermittelt, bevor eine Kommunikation mit einem Transponder stattfindet. Ein adaptiver digitaler Filter wird auf der Grundlage der ermittelten Störfrequenzen so programmiert, dass diese weitgehend ausgefiltert werden können. Dabei ist der Signalprozessor mit der Empfangsschaltung verbunden oder ein Teil derselben.

Das gleiche Problem wird bei der EP-A-1 376 446 dadurch gelöst, dass jeweils zwei Empfangszweige vorhanden sind, von denen einer die Transpondersignale mit den Störsignalen liefert, der andere nur die Störsignale. Letztere werden durch einen Signalprozessor von dem mit den Störsignalen überlagerten Transpondersignal subtrahiert, um die Störungen zu kompensieren.

Der Erfindung liegt die Aufgabe zugrunde, ein Lesegerät zu schaffen, mit dem unter Einsatzbedingungen, das heißt mit der gleichen Leseantenne und der gleichen Empfangsschaltung, eine Messung störender elektrischer, magnetischer oder elektromagnetischer Felder und eine Kontrolle von Entstörmaßnahmen möglich ist.

Diese Aufgabe wird bei einem Lesegerät nach dem Oberbegriff des Anspruchs 1 durch die Merkmale dieses Anspruchs gelöst.

Weiterbildungen und vorteilhafte Ausgestaltungen ergeben sich aus den Unteransprüchen.

Über den Antennenschwingkreis werden die selektiv empfangenen elektromagnetischen Signale der Empfangsschaltung zugeführt. Nach analoger Signalaufbereitung in der Empfangsschaltung - dies kann abhängig von der Eingangsfrequenz und Modulationsart ein Heruntermischen auf ein Basisband oder eine Zwischenfrequenz oder eine Demodulation mit oder ohne zusätzlicher Verstärkung sein - werden die Signale über einen AD-Wandler einer digitalen Signalaufbereitungsschaltung zugeführt. Vom Ausgang der digitalen Signalaufbereitungsschaltung können die digitalen Signale anschließend einem internen oder externen Decoder für Transponderdaten zugeführt werden. Das der digitalen Signalaufbereitungsschaltung zugeführte Signal beinhaltet noch sämtliche von der Leseantenne empfangenen Signalanteile, nämlich neben den vom Transponder empfangenen Transponderdaten als Nutzsignale auch eventuelle Störsignale anderer Störquellen.

Durch zusätzliche Erzeugung eines einen Amplituden-Zeitverlauf und/oder ein Frequenzspektrum der empfangenen Signale darstellenden Anzeigesignals und Darstellung auf einem optischen Anzeigegerät wird eine Messung und umfassende Beurteilung der Signalart und -eigenschaft ermöglicht. Dies gibt Aufschluss darüber, ob eine digitale Signalaufbereitung der vom Transponder empfangenen Transponderdaten zu einem gültigen und später decodierbarem digitalen Signal erfolgreich sein kann oder nicht.

Vorzugsweise ist ein Signalweg zur Datenaufbereitung der Transponderdaten und ein Signalweg zur Erzeugung eines einen Amplituden-Zeitverlauf und/oder ein Frequenzspektrum der empfangenen Signale darstellenden Anzeigesignals gemeinsam über dieselbe Leseantenne geführt.

Weiter vorzugsweise ist der Signalweg zur Datenaufbereitung der Transponderdaten und der Signalweg zur Erzeugung eines einen Amplituden-Zeitverlauf und/oder ein Frequenzspektrum der empfangenen Signale darstellenden Anzeigesignals gemeinsam über dieselbe Empfangsschaltung geführt.

Da zur Erzeugung dieses Anzeigesignals die der digitalen Signalaufbereitungsschaltung zugeführten Signale durch einen in das Lesegerät integrierten Signalprozessor verarbeitet werden, der Bestandteil der digitalen Signalaufbereitungsschaltung sein kann, lässt sich die Messung und umfassende Beurteilung der Signalart und -eigenschaft unter Einsatzbedingungen vornehmen. Dies liegt daran, dass dieselbe Leseantenne und dieselbe Empfangsschaltung des Lesegerätes genutzt wird, wie sie auch für den Empfang der Transponderdaten verwendet wird, und damit den gleichen Zustand erfasst wie ein Lesegerät für Transponderdaten.

Ungenauigkeiten, wie sie bei Umrechnungen oder Übertragungen von Messungen mit gesonderten Messgeräten auf Einsatzbedingungen auftreten können, werden vermieden. Dies gilt auch für störende Beeinflussungen durch Messleitungen externer Messgeräte an kritischen Schaltungspunkten des Lesegerätes. Ferner wird der Einfluss von Entstörmaßnahmen unmittelbar sichtbar und kann so zielgerichtet optimiert werden.

Die Frequenz des elektromagnetischen Feldes kann in einem Bereich zwischen 8 kHz und 2,54 GHz liegen. Üblich und zugelassen sind ein LF-Bereich zwischen 100 kHz und 150 kHz ein HF-Bereich bei 13 MHz, ein UHF-Bereich bei 900 MHz und ein SHF-Bereich bei 2,44 GHz. Der LF- und HF-Bereich zeichnet sich durch homogene Ausbreitungsbedingungen und gute Eindringtiefe aus, unterliegt aber auch störender Beeinflussung durch elektronische Geräte wie Monitore oder HF-Generatoren, oder elektrischer Geräte wie Schalter, Hochspannungsgeräte oder Elektromotore. Der UHF- und SHF-Bereich zeichnet sich durch große Leseabstände aus, unterliegt aber auch störender Beeinflussung durch Reflektionen oder benachbarte Mobiltelefone und Datenfunknetze sowie Mikrowellengeräte, die direkte Störsignale oder durch gleichzeitigen Betrieb auch Störsignale durch Überlagerung erzeugen können. Je nach Einsatzgebiet des Lesegerätes sind daher eine Vielzahl möglicher störender Beeinflussungen zwangsläufig zu berücksichtigen.

Vorzugsweise ist der integrierte Signalprozessor Bestandteil der Empfangsschaltung und ist programmgesteuert zwischen einer Datenaufbereitungsprozedur und einer Anzeigesignalprozedur umschaltbar ist.

Der schaltungstechnische Aufwand wird durch die gemeinsame Nutzung des Signalsprozessors minimiert und neben einer Kosteneinsparung wird auch die Gefahr störender Einkopplungen durch eine größere Schaltungsauslegung vermieden. Vor allem die gemeinsame Nutzung der Leseantenne und der Empfangsvorrichtung liefert in dieser Konstellation die Störsignale mit gleicher Amplitude, Phase und Frequenz, wie sie das Lesegerät für Transponderdaten auch erfasst. Dadurch kann die Inbetriebnahme und Benutzung auch durch wenig geschultes Personal im In- und Ausland vorgenommen werden.

Das Anzeigesignal kann zusätzlich wenigstens eine vom integrierten Signalprozessor generierte Detektionsschwelle umfassen, die als zweidimensionale Funktion zusätzlich zum Amplituden-Zeitverlauf und/oder zum Frequenzspektrum der empfangenen Signale auf der Anzeigevorrichtung darstellbar ist.

Durch diese Maßnahme wird die Beurteilung der auf der Anzeigevorrichtung dargestellten Messwerte erleichtert, indem vorermittelte Eigenschaften der Datenaufbereitung und Decodierbarkeit in Form eines optischen Kriteriums gleichzeitig dargestellt werden.

Das Anzeigesignal kann auch zusätzlich eine vom integrierten Signalprozessor generierte und der Detektionsschwelle zugeordnete Zahlenangabe umfassen, die gemeinsam mit der zweidimensionalen Funktion der Detektionsschwelle auf der Anzeigevorrichtung darstellbar ist, wobei die Zahlenangabe Informationen, wie Reichweite, Detektionswahrscheinlichkeit, Fehlerwahrscheinlichkeit oder Fehlerhäufigkeit enthält.

Diese Angabe ist besonders vorteilhaft bei der Anzeige unterschiedlicher Detektionsschwellen, um deren Bedeutung direkt auf der Anzeigevorrichtung zu kennzeichnen.

Weiterhin kann der Signalprozessor zusätzlich wenigstens ein steuerbares digitales Filter für die empfangenen Signale umfassen.

Damit lassen sich Störsignale dämpfen, die außerhalb des Frequenzspektrums der vom Transponder gesendeten Transponderdaten liegen. Mögliche Störsignale lassen sich bei Anzeige des Frequenzspektrum der empfangenen demodulierten Signale erkennen und ebenso der Einfluss des steuerbares digitales Filter auf diese Störsignale. Durch die Implementierung des digitalen Filters in den Signalprozessor wird ebenfalls der schaltungstechnische Aufwand minimiert und neben einer Kosteneinsparung wird auch die Gefahr störender Einkopplungen durch eine größere Schaltungsauslegung vermieden.

Zusätzlich kann wenigstens ein Störsignalerfassungssensor an die oder eine weitere Empfangsschaltung angeschlossen sein und Signalwege von der Leseantenne und vom Störsignalerfassungssensor können mit einer Kompensationsschaltung zur gegenphasigen gewichteten Verknüpfung der Signale von der Leseantenne und vom Störsignalerfassungssensor gekoppelt sein.

Die gegenphasige gewichtete Verknüpfung der Signale kann durch zusätzliche Hardware oder durch mathematische Methoden innerhalb der digitalen Signalaufbereitungsschaltung vorgenommen werden.

Hierdurch lassen sich auch Störsignale dämpfen, die innerhalb des Frequenzspektrums der vom Transponder gesendeten Transponderdaten liegen oder in Amplitude, Phase und Frequenz dynamisch variieren. Durch eine Gewichtung ist es möglich, die Amplitude der gegenphasig für die Kompensation genutzten Störsignale an die Amplitude der den Transponderdaten überlagerten Störsignale anzupassen, um so eine möglichst vollständige Dämpfung der mit Transponderdaten überlagerten Störsignale zu erhalten. Die Störkompensation läuft parallel zur Datenaufbereitungsprozedur und Anzeigesignalprozedur ab, um auf veränderte Umgebungsbedingungen dynamisch reagieren zu können. Mögliche Störsignale lassen sich bei Anzeige des Amplituden-Zeitverlaufs und/oder des Frequenzspektrums der empfangenen Signale erkennen und ebenso der Einfluss der Kompensation auf diese Störsignale.

Das Lesegerät kann direkt oder über ein Netzwerk mit einer Steuerschaltung verbunden sein, an die auch weitere Lesegeräte angeschlossen sind, und durch die Steuerschaltung können über Steuersignale Lesegeräte, deren Leseantennen gegenseitig stören, wechselweise im Zeitmultiplex zum Lesen von Transponderdaten aktiviert und deaktiviert werden.

Hierdurch ist es möglich, bei Einsatz mehrerer Lesegeräte auf engem Raum und damit gegenseitiger Störungen auf derselben Frequenz, diese Störquellen wechselweise vollständig abzuschalten.

Das Lesegerät kann direkt oder über ein Netzwerk mit einer Steuerschaltung verbunden sein, an die auch weitere Lesegeräte angeschlossen sind, und durch die Steuerschaltung können zum Lesen von Transponderdaten deaktive Lesegeräte als Störerfassungssensoren aktiviert werden und mit zum Lesen von Transponderdaten aktiven Lesegeräten gekoppelt werden und die von den als Störerfassungssensoren aktivierten Lesegeräten empfangenen Signale ebenfalls der Kompensationsschaltung zugeführt werden.

Bei dieser Ausführung lassen sich andere Lesegeräte als Störerfassungssensoren mitbenutzen und so der schaltungstechnische Aufwand bei einem System mit mehreren Lesegeräten verringern.

Das Lesegerät kann einen Scanner umfassen, der mit dem digitalen Signalprozessor verbunden ist oder Bestandteil des digitalen Signalprozessors ist, zur Erzeugung eines ein Spektrum von belegten und unbelegten Transponderkanälen sowie Störquellen umfassenden Anzeigesignals und Darstellung auf dem optischen Anzeigegerät.

Bei Transpondersystemen, die im HF-, UHF, und SHF-Bereich arbeiten, können aufgrund der höheren Bandbreite von einem Lesegerät mehrere Transponderkanäle verwaltet werden. Die beschriebene Anzeige liefert dann zusätzliche Informationen über mögliche von anderen Lesegeräten belegte Transponderkanäle oder Störquellen und erleichtert dadurch die Installation und Entstörung von Lesegeräten z. B. durch Veränderung der Ausrichtung, des Standorts oder der gegenseitigen Abschirmung von Leseantennen.

Das Lesegerät kann einen Scanner umfassen, der mit dem digitalen Signalprozessor verbunden ist oder Bestandteil des digitalen Signalprozessors ist, zur Ermittlung von Störsignalen nach Amplitude, Frequenz und Phase, und Steuerung der Kompensationsschaltung zur Kompensation von Störungen störüberlagerter Transponderdaten.

Hierdurch lassen sich mehrere Störquellen, die sich zudem noch durch unterschiedliche Frequenz, Phase und Amplitude unterscheiden, gleichzeitig kompensieren.

Ferner durch den digitalen Signalprozessors ein Anzeigesignal entstörbarer und nicht entstörbarer Transponderkanäle generiert und auf dem optischen Anzeigegerät dargestellt werden.

Diese Anzeige liefert eine Information darüber, welche Stöquellen automatisch vom Lesegerät kompensiert werden können und bei welchen diese nicht möglich ist und zusätzliche Maßnahmen bei Aufstellung und Einrichtung der Lesegräte sowie Veränderung anderer Geräte erforderlich macht.

Nachfolgend wird die Erfindung anhand der Zeichnung erläutert. Darin zeigen:
Fig. 1 ein Blockdiagramm eines Lesegerätes,
Fig. 2 ein weiteres Blockdiagramm eines Lesegerätes mit einer zusätzlichen Kompensationsschaltung,
Fig. 3 eine Darstellung eines Lesegerätes mit einem Transponder sowie Störquellen in der Umgebung,
Fig. 4 ein Diagramm der Anzeige eines Amplituden/Zeitverlaufs eines Transpondersignals im Vollduplexbetrieb mit einem schwachen Störsignal,
Fig. 5 ein Diagramm der Anzeige eines Frequenzspektrums desselben Transpondersignals nach Fig. 4,
Fig. 6 ein Diagramm der Anzeige eines Amplituden/Zeitverlaufs eines Transpondersignals im Vollduplexbetrieb mit einem starken Störsignal,
Fig. 7 ein Diagramm der Anzeige eines Frequenzspektrums desselben Transpondersignals nach Fig. 6,
Fig. 8 ein Diagramm der Anzeige eines Amplituden/Zeitverlaufs eines Transpondersignals im Halbduplexbetrieb ohne Störsignal,
Fig. 9 ein Diagramm der Anzeige eines Frequenzspektrums desselben Transpondersignals nach Fig. 8,
Fig. 10 ein Diagramm der Anzeige eines Amplituden/Zeitverlaufs eines Transpondersignals im Halbduplexbetrieb mit einem Störsignal,
Fig. 11 ein Diagramm der Anzeige eines Frequenzspektrums desselben Transpondersignals nach Fig. 10,
Fig. 12 ein Diagramm der Anzeige eines Frequenzspektrums eines Transpondersignals mit eingeblendeten Detektionsschwellen mit einem starken Störsignal und
Fig. 13 ein Diagramm der Anzeige eines Frequenzspektrums eines Transpondersignals mit eingeblendeten Detektionsschwellen mit einem durch Kompensation gedämpftem Störsignal.

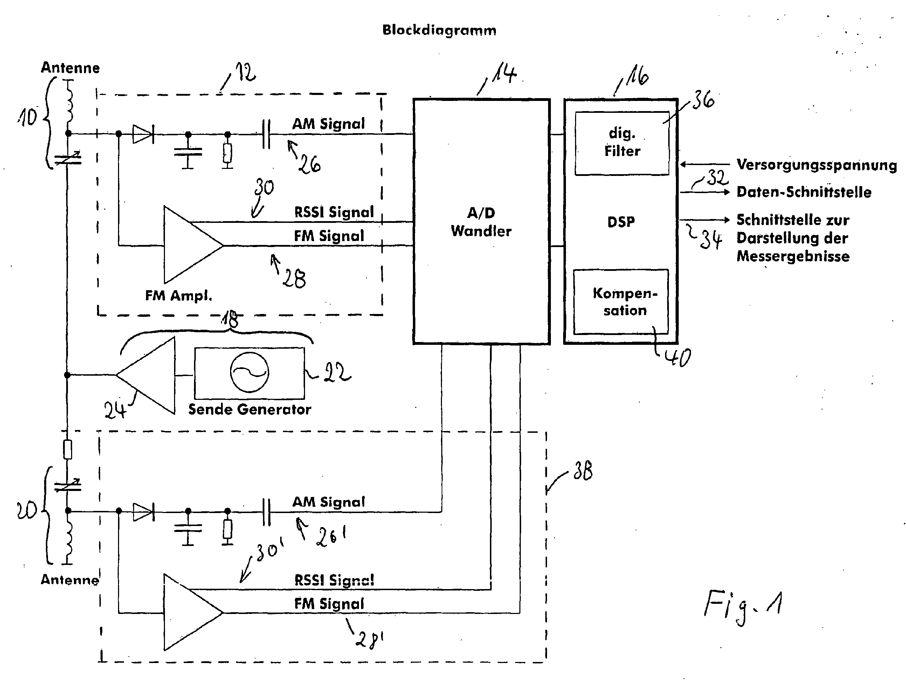

Fig. 1 zeigt ein Blockdiagramm eines Lesegerätes zum berührungslosen Lesen von Transponderdaten über ein elektromagnetisches Feld. Dazu umfasst das Lesegerät eine Leseantenne 10 aus einem abstimmbaren Leseschwingkreis, der einerseits mit einer Empfangsschaltung 12 mit nachfolgendem AD-Wandler 14 und anschließender Signalaufbereitungsschaltung als digitaler Signalprozessor 16 und andererseits mit einem Energiesender 18 zur berührungslosen Versorgung des Transponders mit Energie verbunden ist. Zusätzlich umfasst das Lesegerät einen Störsignalerfassungssensor 20, der ebenfalls mit einer Empfangsschaltung 38 verbunden ist.

Der Energiesender 18 besteht aus einem HF-Generator 22 und einem Leistungsverstärker 24. Das Lesegerät ist sowohl für Vollduplexbetrieb als auch für Halbduplexbetrieb ausgelegt. Im Vollduplexbetrieb wird ein Datentelegramm vom Transponder zum Lesegerät übertragen, in dem das vom Energiesender des Lesegerätes erzeugte elektromagnetische Feld durch einen Modulator des Transponders dynamisch bedämpft wird.

Im Halbduplexbetrieb wird zunächst Energie vom Lesegerät zum Transponder übertragen und dort temporär gespeichert. Danach wir die Energieübertragung vom Lesegerät zum Transponder unterbrochen. Anschließend wird ein Datentelegramm vom Transponder zum Lesegerät übertragen, in dem der Transponder mit der gespeicherten Energie selbst ein elektromagnetisches Feld erzeugt, das über einen FSK-Modulator moduliert wird.

Zur Rückgewinnung des Modulationsinhalts im Vollduplexbetrieb dient ein AM-Demodulator und zur Rückgewinnung des Modulationsinhalts im Vollduplexbetrieb dient ein FM-Demodulator. Dabei sind die Signalwege des AM-Demodulators 26 und des FM-Demodulators 28 in der Empfangsschaltung 12 als Bauelemente für eine analoge Signalaufbereitung getrennt ausgebildet und anschließend über den AD-Wandler 14 zu dem digitalen Signalprozessor 16 zusammengeführt. Ein dritter analoger Signalweg 30 liefert ein RSSI-Signal liefert, dass die Empfangsfeldstärke repräsentiert und dem digitalen Signalprozessor 16 zusätzlich über den AD-Wandler 14 zugeführt wird.

Am Ausgang des digitalen Signalprozessors 16 können die digitalen Transponderdaten über eine Datenschnittschnelle 32 einem Decoder zugeführt und dort ausgewertet werden.

Erfindungsgemäß wird durch den digitalen Signalprozessor 16 außerdem ein einen Amplituden-Zeitverlauf und/oder ein Frequenzspektrum der empfangenen demodulierten Signale darstellendes Anzeigesignal erzeugt. Besonders vorteilhaft ist hier, dass mit derselben Leseantenne 10 und derselben Empfangsschaltung 12 des Lesegerätes die Signale für die Gewinnung der Transponderdaten und des Anzeigesignals empfangen und vorverarbeitet werden und somit einheitlich und im direkten Vergleich unverfälscht erfasst werden können.

An einem weiteren Ausgang des digitalen Signalprozessors ist ein in das Lesegerät integriertes optisches Anzeigegerät angeschlossen und/oder eine in das Lesegerät integrierte Schnittstelle 34 zum Anschluss eines externen optischen Anzeigegeräts angeordnet.

Außerdem umfasst der digitale Signalprozessor 16 ein steuerbares digitales Filter 36, mit dem Störsignale außerhalb des Frequenzspektrums der vom Transponder gesendeten Transponderdaten gedämpft werden können.

Das Lesegerät umfasst ferner wenigstens einen Störsignalerfassungssensor 20, der an eine Empfangsschaltung 38 angeschlossen ist. Dabei ist diese Empfangsschaltung analog der Empfangsschaltung 12 für die Transpondersignale aufgebaut und ebenfalls über den AD-Wandler 14 mit zu dem digitalen Signalprozessor 16 verbunden. Bei der weiteren Empfangsschaltung 38 sind die entsprechenden Signalwege mit 26', 28' und 30' bezeichnet.

Der digitale Signalprozessor 16 bildet außerdem eine Kompensationsschaltung 40 zur gegenphasigen gewichteten Verknüpfung der Signale von der Leseantenne 10 und vom Störsignalerfassungssensor 20. Diese ist hier durch den digitalen Signalprozessor 16 selbst gebildet und die gegenphasige gewichtete Verknüpfung der Signale von der Lesesantenne 10 und vom Störsignalerfassungssensor 20 wird programmgesteuert durch mathematische Methoden vorgenommen.

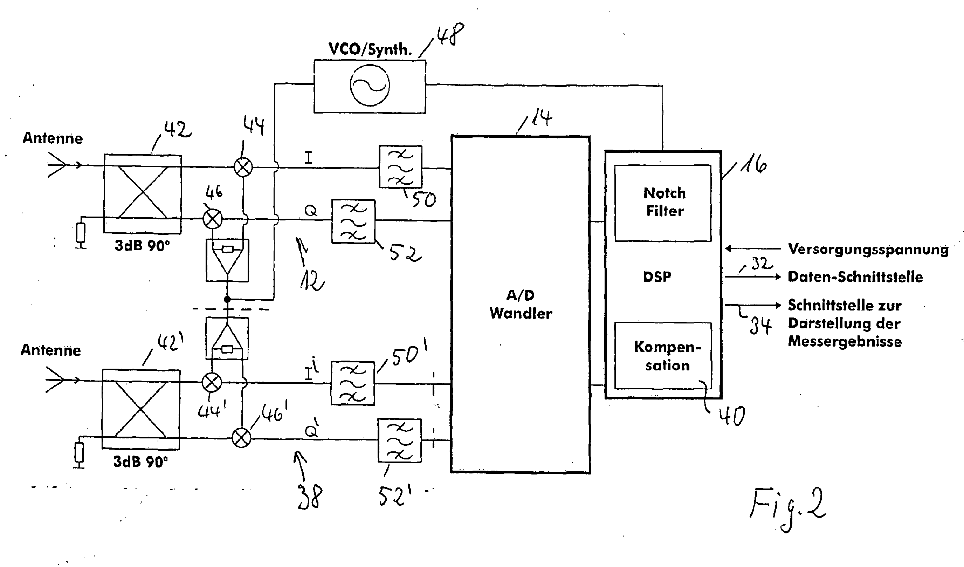

Fig. 2 zeigt ein weiteres Blockdiagramm eines Lesegerätes mit einer zusätzlichen Kompensationsschaltung. Hier ist bei einer Empfangsschaltung 12 mit einem analogen Signalweg für Nutzsignale ein erster Mischer 42 zur Erzeugung von um 90 Grad phasenverschobener Ausgangssignale angeordnet und in den beiden Ausgangssignalwegen I, Q sind jeweils ein weiterer Mischer 44, 46 zur Überlagerung mit einem Oszillatorsignal angeordnet. Eine weitere Empfangsschaltung 38 mit einem analogen Signalweg für von einem Störerfassungssensor erfasste Signale ist analog zudem Signalweg für Nutzsignale aufgebaut. Dort ist ein erster Mischer 42' zur Erzeugung von um 90 Grad phasenverschobener Ausgangssignale angeordnet und in den beiden Ausgangssignalwegen I', Q' sind jeweils ein weiterer Mischer 44', 46' zur Überlagerung mit demselben Oszillatorsignal angeordnet.

Das Oszillatorsignal wird von einem Oszillator 48 erzeugt, dessen Frequenz, Amplitude und Phase vom digitalen Signalprozessor 16 steuerbar ist. Dadurch ist eine dynamische Kompensation von Störsignalen nach Frequenz, Amplitude und Phase möglich.

Vom Ausgang der weiteren Mischer 44, 46 gelangen die Signalanteile schließlich über Filter 50, 52 zum AD-Wandler 14.

Auch weitere Empfangsschaltung 38 umfasst entsprechende Filter 50', 52' in den Ausgangssignalwegen I', Q'.

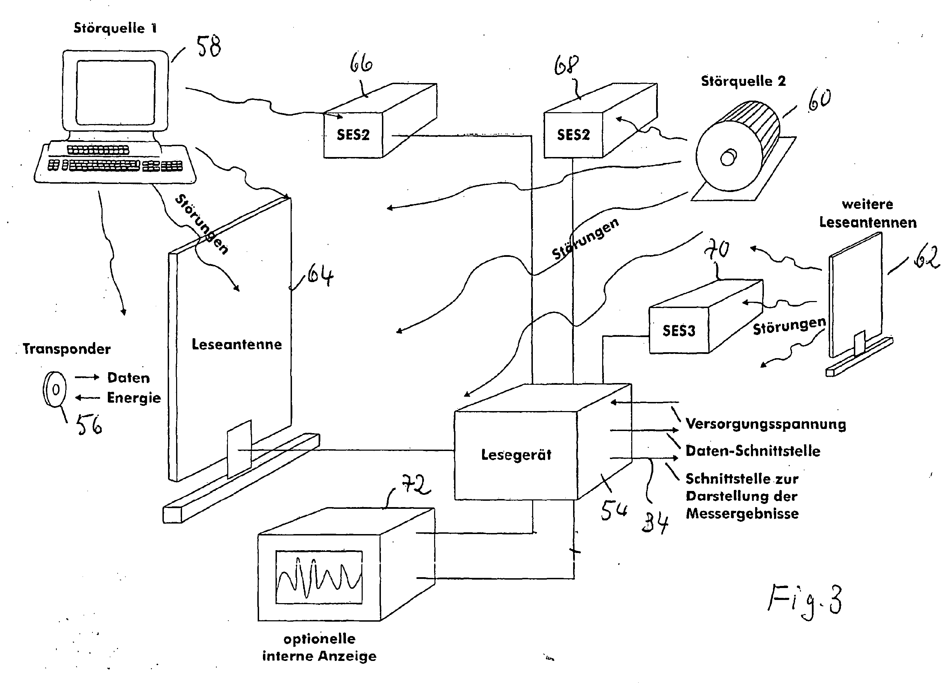

Fig. 3 zeigt eine Darstellung eines Lesegerätes 54 mit einem Transponder 56 sowie Störquellen 58, 60, 62 in der Umgebung. An das Lesegerät 54 ist eine Leseantenne 64 mit einem Leseschwingkreis angeschlossen, beim dem die Induktivität als Rahmenantenne ausgebildet ist. In dessen Empfangsbereich befindet sich der Transponder 56. In der Nähe der Leseantenne befinden sich Störquellen 58, 60, 62 in Form eines Monitors und eines Elektromotors sowie eines weiteren Lesegerätes. Die von diesen Störquellen 58, 60, 62 ausgehenden Störsignale werden ebenfalls von der Leseantenne 64 empfangen und so den Transponderdaten überlagert. Störerfassungssensoren 66, 68, 70 sind im Abstand zur Leseantenne 64 in der Nähe der Störquellen 58, 60, 62 angeordnet und empfanden auch die von den genannten Störquellen 58, 60, 62 ausgehenden Störsignale. Durch die Kompensationsschaltung des Lesegerätes 54 können die von den Störerfassungssensoren 66, 68, 70 empfangenen Störsignale gegenphasig gewichtet mit den Signalen von der Leseantenne verknüpft und so gedämpft werden, so dass die Transponderdaten von den Störsignalen befreit werden und decodiert werden können.

Über ein optisches Anzeigegerät 72, das an einen Ausgang des Signalprozessors direkt oder über eine in das Lesegerät integrierte Schnittstelle 34 angeschlossen ist, lassen sich der Amplituden-Zeitverlauf und/oder das Frequenzspektrum der empfangenen Signale darstellen. Die Figuren 3 bis 12 zeigen hierzu Beispiele.

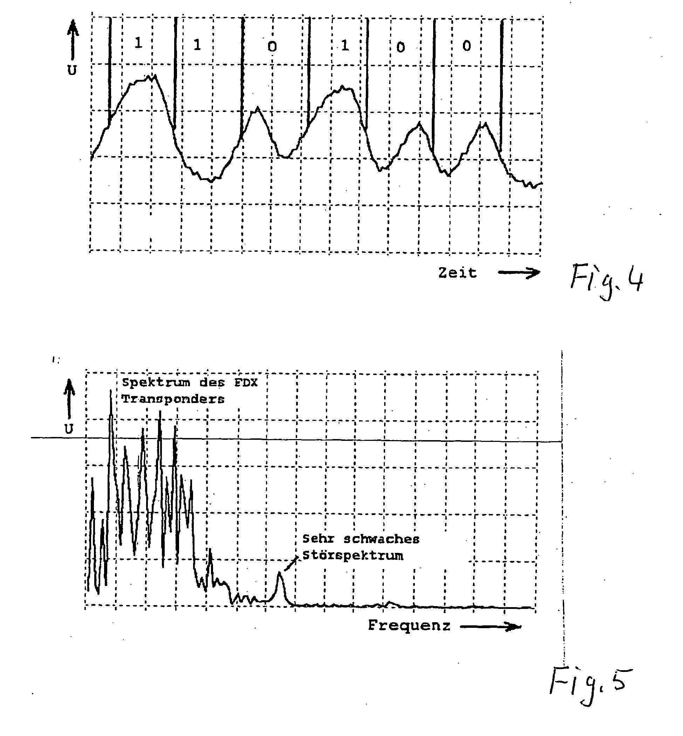

Fig. 4 zeigt ein Diagramm der Anzeige eines Amplituden/Zeitverlaufs eines Transpondersignals im Vollduplexbetrieb mit einem schwachen Störsignal. Der dargestellte Amplitudenverlauf lässt einmal erkennen, dass Transponderdaten überhaupt empfangen werden und des weiteren, dass diese Transponderdaten nur von geringen Oberwellen überlagert sind. Der Amplitudenverlauf zeigt eindeutige Nulldurchgänge, die eine Decodierung der enthaltenen digitalen Information, wie sie hier zur Veranschaulichung zusätzlich dargestellt ist, ermöglichen.

Fig. 5 zeigt ein Diagramm der Anzeige eines Frequenzspektrums desselben Transpondersignals nach Fig. 4. Im Abstand zum Spektrum des Transpondersignals ist das Spektrum des Störsignals dargestellt. Dessen Intensität ist wesentlich geringer als die des Transpondersignals und daher ist ein störender Einfluss auf die Decodierbarkeit nicht zu erwarten.

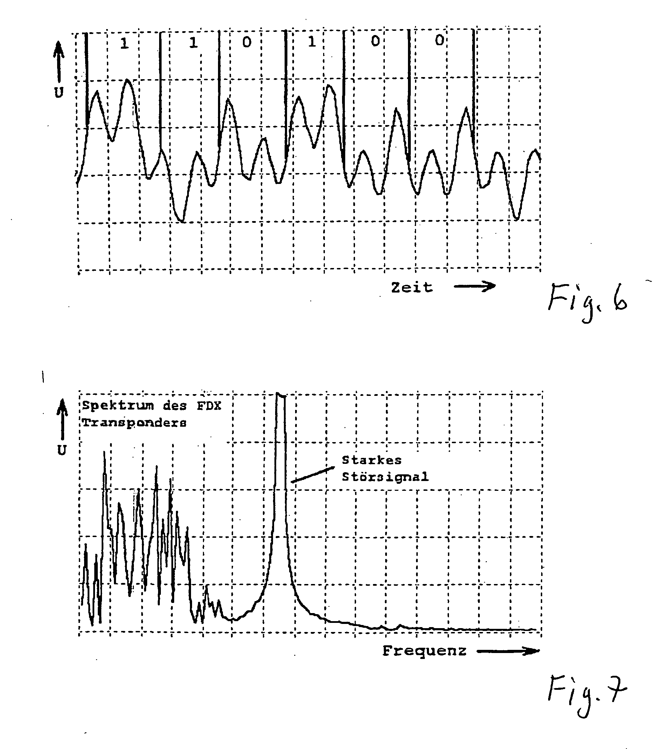

Fig. 6 zeigt ein Diagramm der Anzeige eines Amplituden/Zeitverlaufs eines Transpondersignals im Vollduplexbetrieb mit einem starken Störsignal. Der dargestellte Amplitudenverlauf lässt zwar erkennen, dass Transponderdaten überhaupt empfangen werden, diese Transponderdaten werden aber von starken Oberwellen überlagert. Der Amplitudenverlauf zeigt keine eindeutigen Nulldurchgänge für die Nutzsignale. Eine Decodierung der enthaltenen digitalen Information, wie sie hier zur Veranschaulichung zusätzlich dargestellt ist, ist daher fraglich oder nicht möglich.

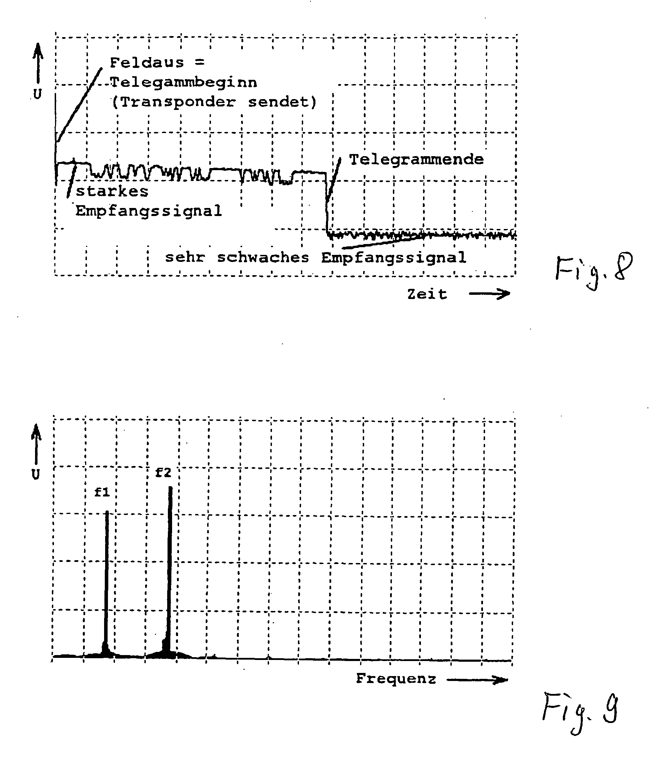

Fig. 7 zeigt ein Diagramm der Anzeige eines Frequenzspektrums desselben Transpondersignals nach Fig. 6. Im Abstand zum Spektrum des Transpondersignals ist das Spektrum des Störsignals dargestellt. Dessen Intensität ist größer als die des Transpondersignals und daher ist ein störender Einfluss auf die Decodierbarkeit zu erwarten.

Fig. 8 zeigt ein Diagramm der Anzeige eines Amplituden/Zeitverlaufs eines Transpondersignals im Halbduplexbetrieb ohne Störsignal. Nach Abschalten des Energiesenders des Lesegerätes sendet der Transponder zunächst ein FSKmoduliertes Datentelegramm und schaltetet anschließend ebenfalls ab. Dargestellt ist hier das RSSI-Signal, das die Empfangsfeldstärke repräsentiert.

Der Übergang des RSSI-Signals von einem starken Empfangssignal zu einem schwachen Empfangssignal zeigt an, dass der Transponder überhaupt sendet. Die Amplitudenschwankungen lassen weiterhin erkennen, dass Transponderdaten in FSK gesendet werden. Die Amplitudenschwankungen entstehen durch die Frequenzänderung des gesendeten Signals bei konstanter Resonanzfrequenz des Leseschwingkreises. Die innerhalb eines oberen und unteren Wertes stets konstanten Amplitudenschwankungen lassen erkennen, dass das Transpondersignal nicht mit Störsignalen überlagert ist. Auch der starke Unterschied des RSSI-Signals zwischen der Sendephase und der Ruhephase des Transponders zeigt einen deutlichen Störabstand.

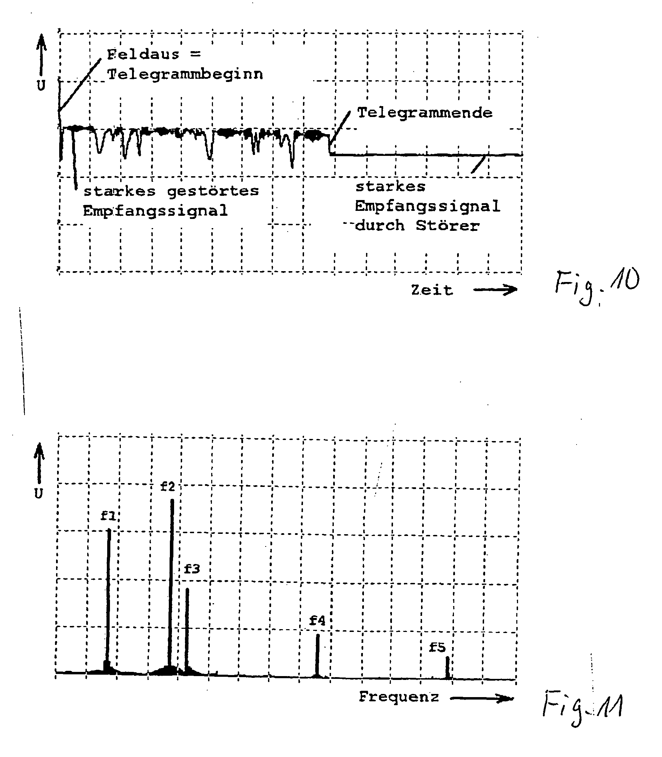

Fig. 9 zeigt ein Diagramm der Anzeige eines Frequenzspektrums desselben Transpondersignals nach Fig. 8. Dort sind die beiden Spektrallinien erkennbar, die durch Frequenzumtastung des vom Transponder gesendeten Signals entstehen. Störsignale, die weitere Spektralanteile liefern würden, sind nicht erkennbar.

Fig. 10 zeigt ein Diagramm der Anzeige eines Amplituden/Zeitverlaufs eines Transpondersignals im Halbduplexbetrieb mit einem Störsignal. Der Übergang des RSSI-Signals von einem ersten zu einem zweiten Empfangssignal zeigt zwar an, dass der Transponder überhaupt sendet, der Feldstärkeunterschied ist aber gering und lässt auf ein Störsignal schließen. Die Amplitudenschwankungen während der Sendephase bewegen sich nicht zwischen konstanten oberen und unteren Werten, was ebenfalls auf Störsignale hindeutet.

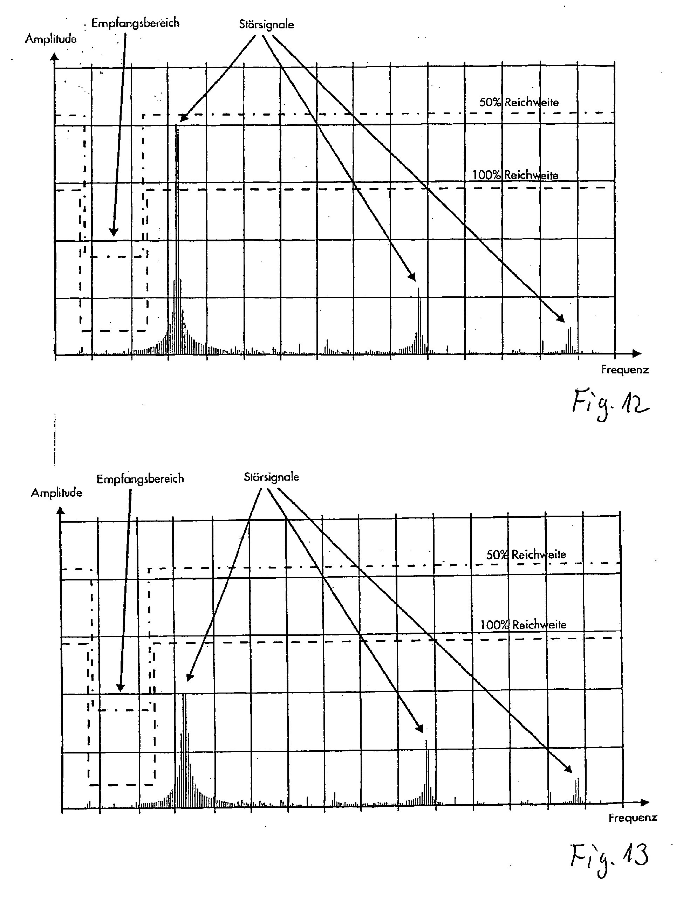

Fig. 11 zeigt ein Diagramm der Anzeige eines Frequenzspektrums desselben Transpondersignals nach Fig. 10. Neben den beiden Spektrallinien, die durch Frequenzumtastung des vom Transponder gesendeten Signals entstehen, sind weitere Spektralanteile von Störsignalen erkennbar.

Fig. 12 zeigt ein Diagramm der Anzeige eines Frequenzspektrums eines Transpondersignals mit eingeblendeten Detektionsschwellen mit einem starken Störsignal. Die Detektionsschwellen werden vom integrierten Signalprozessor aufgrund von Vorversuchen generiert und zusätzlich werden Zahlenangaben zugeordnet, die Informationen über die Reichweite enthalten. Der Verlauf der jeweiligen Detektionsschwelle kann selektive Eigenschaften analoger oder digitaler Filter des Lesegerätes berücksichtigen.

In Fig. 12 befindet sich in der Nähe des Empfangsbereichs ein starker Spektralanteil eines Störers und weiter entfernt schwächere Spektralanteile des Störers. Durch die Einblendung der Detektionsschwellen wird erkennbar, dass durch den starken Spektralanteil des Störers die Lesereichweite auf 50% des maximalen Wertes verringert ist.

Fig. 13 zeigt ein Diagramm der Anzeige eines Frequenzspektrums eines Transpondersignals mit eingeblendeten Detektionsschwellen mit einem durch Kompensation gedämpftem Störsignal. Durch die Einblendung der Detektionsschwellen wird erkennbar, dass trotz des Spektralanteils des Störers die Lesereichweite nicht verringert ist.

## Patentansprüche

1. Lesegerät zum berührungslosen Lesen von Transponderdaten über ein elektromagnetisches Feld mit einer Leseantenne (10), die mit einer Empfangsschaltung (12) zur Demodulation und Datenaufbereitung der Transponderdaten verbunden ist, wobei das Lesegerät einen mit der Empfangsschaltung (12) verbundenen oder einen Bestandteil der Empfangsschaltung (12) bildenden digitalen Signalprozessor (16) umfasst, der ein Frequenzspektrum der empfangenen Signale auswertet, **dadurch gekennzeichnet, dass** an einen Anzeigesignalausgang des digitalen Signalprozessor (16) ein einen Amplituden-Zeitverlauf und/oder ein Frequenzspektrum der empfangenen Signale darstellendes Anzeigesignal ansteht und dass an den Anzeigesignalausgang des digitalen Signalprozessors (16) ein in das Lesegerät integriertes optisches Anzeigegeräts für den Amplituden-Zeitverlauf und/oder das Frequenzspektrum der empfangenen Signale angeschlossen ist und/oder eine in das Lesegerät integrierte Schnittstelle (34) zum Anschluss eines externen optischen Anzeigegeräts (72) für den Amplituden-Zeitverlauf und/oder das Frequenzspektrum der empfangenen Signale angeschlossen ist.

2. Lesegerät nach Anspruch 1, **dadurch gekennzeichnet, dass** ein Signalweg zur Datenaufbereitung der Transponderdaten und ein Signalweg zur Erzeugung eines einen Amplituden-Zeitverlauf und/oder ein Frequenzspektrum der empfangenen Signale darstellenden Anzeigesignals gemeinsam über dieselbe Leseantenne (10) geführt ist.

3. Lesegerät nach Anspruch 1 oder 2, **dadurch gekennzeichnet, dass** ein Signalweg zur Datenaufbereitung der Transponderdaten und ein Signalweg zur Erzeugung eines einen Amplituden-Zeitverlauf und/oder ein Frequenzspektrum der empfangenen Signale darstellenden Anzeigesignals gemeinsam über dieselbe Empfangsschaltung (12) geführt ist.

4. Lesegerät nach einem der Ansprüche 1 bis 3, **dadurch gekennzeichnet, dass** die Frequenz des elektromagnetischen Feldes in einem Bereich zwischen 8 kHz und 2,54 GHz liegt.

5. Lesegerät nach einem der Ansprüche 1 bis 4, **dadurch gekennzeichnet, dass** die Frequenz des elektromagnetischen Feldes im LF-Bereich zwischen 100 kHz und 150 kHz liegt.

6. Lesegerät nach einem der Ansprüche 1 bis 4, **dadurch gekennzeichnet, dass** die Frequenz des elektromagnetischen Feldes im HF-Bereich bei 13 MHz liegt.

7. Lesegerät nach einem der Ansprüche 1 bis 4, **dadurch gekennzeichnet, dass** die Frequenz des elektromagnetischen Feldes im UHF-Bereich bei 900 MHz liegt.

8. Lesegerät nach einem der Ansprüche 1 bis 4, **dadurch gekennzeichnet, dass** die Frequenz des elektromagnetischen Feldes im SHF-Bereich bei 2,54 GHz liegt.

9. Lesegerät nach einem der Ansprüche 1 bis 8, **dadurch gekennzeichnet, dass** der integrierte Signalprozessor (16) als Bestandteil der Empfangsschaltung programmgesteuert zwischen einer Datenaufbereitungsprozedur und einer Anzeigesignalprozedur umschaltbar ist.

10. Lesegerät nach einem der Ansprüche 1 bis 9, **dadurch gekennzeichnet, dass** das Anzeigesignal zusätzlich wenigstens eine vom integrierten Signalprozessors generierte Detektionsschwelle umfasst, die als zweidimensionale Funktion zusätzlich zum Amplituden-Zeitverlauf der empfangenen Signale auf der Anzeigevorrichtung darstellbar ist.

11. Lesegerät nach einem der Ansprüche 1 bis 9, **dadurch gekennzeichnet, dass** das Anzeigesignal zusätzlich wenigstens eine vom integrierten Signalprozessors generierte Detektionsschwelle umfasst, die als zweidimensionale Funktion zusätzlich zum Frequenzspektrum der empfangenen Signale auf der Anzeigevorrichtung (72) darstellbar ist.

12. Lesegerät nach Anspruch 10 oder 11, **dadurch gekennzeichnet, dass** das Anzeigesignal zusätzlich eine vom integrierten Signalprozessor (16) generierte und der Detektionsschwelle zugeordnete Zahlenangabe umfasst, die gemeinsam mit der zweidimensionalen Funktion der Detektionsschwelle auf der Anzeigevorrichtung (72) darstellbar ist.

13. Lesegerät nach Anspruch 12, **dadurch gekennzeichnet, dass** die Zahlenangabe Informationen, wie Reichweite, Detektionswahrscheinlichkeit, Fehlerwahrscheinlichkeit oder Fehlerhäufigkeit enthält.

14. Lesegerät nach einem der Ansprüche 1 bis 13, **dadurch gekennzeichnet, dass** der Signalprozessor (16) zusätzlich wenigstens ein steuerbares digitales Filter (36) für die empfangenen Signale umfasst.

15. Lesegerät nach einem der Ansprüche 1 bis 14, **dadurch gekennzeichnet, dass** zusätzlich wenigstens ein Störsignalerfassungssensor (20) an die oder eine weitere Empfangsschaltung (38) angeschlossen ist und dass Signalwege von der Leseantenne (10) und vom Störsignalerfassungssensor (20) mit einer Kompensationsschaltung (40) zur gegenphasigen gewichteten Verknüpfung der Signale von der Leseantenne (10) und vom Störsignalerfassungssensor (20) gekoppelt sind.

16. Lesegerät nach Anspruche 15, **dadurch gekennzeichnet, dass** die Kompensationsschaltung (40) durch den digitalen Signalprozessor (16) gebildet ist, wobei die Kompensation programmgesteuert durch mathematische Methoden erfolgt.

17. Lesegerät nach einem der Ansprüche 1 bis 16, **dadurch gekennzeichnet, dass** das Lesegerät direkt oder über ein Netzwerk mit einer Steuerschaltung verbunden ist an die auch weitere Lesegeräte angeschlossen sind, und dass durch die Steuerschaltung über Steuersignale Lesegeräte, deren Leseantennen gegenseitig stören, wechselweise im Zeitmultiplex zum Lesen von Transponderdaten aktivierbar und deaktivierbar sind.

18. Lesegerät nach einem der Ansprüche 1 bis 17, **dadurch gekennzeichnet, dass** das Lesegerät direkt oder über ein Netzwerk mit einer Steuerschaltung verbunden ist an die auch weitere Lesegeräte angeschlossen sind, und dass durch die Steuerschaltung zum Lesen von Transponderdaten deaktive Lesegeräte als Störerfassungssensoren aktivierbar sind und mit zum Lesen von Transponderdaten aktiven Lesegeräten koppelbar sind und die von den als Störerfassungssensoren aktivierten Lesegeräten empfangenen Signale ebenfalls der Kompensationsschaltung zugeführt sind.

19. Lesegerät nach einem der Ansprüche 1 bis 18, **dadurch gekennzeichnet, dass** das Lesegerät einen Scanner umfasst, der mit dem digitalen Signalprozessor verbunden ist oder Bestandteil des digitalen Signalprozessors ist, zur Erzeugung eines ein Spektrum von belegten und unbelegten Transponderkanälen sowie Störquellen umfassenden Anzeigesignals und Darstellung auf dem optischen Anzeigegerät.

20. Lesegerät nach einem der Ansprüche 15 bis 19, **dadurch gekennzeichnet, dass** das Lesegerät einen Scanner umfasst, der mit dem digitalen Signalprozessor verbunden ist oder Bestandteil des digitalen Signalprozessors ist, zur Ermittlung von Störsignalen nach Amplitude, Frequenz und Phase, und Steuerung der Kompensationsschaltung zur Kompensation von Störungen störüberlagerter Transponderdaten.

21. Lesegerät nach Anspruch 20, **dadurch gekennzeichnet, dass** durch den digitalen Signalprozessors ein Anzeigesignal entstörbarer und nicht entstörbarer Transponderkanäle generierbar und auf dem optischen Anzeigegerät darstellbar ist.

## Claims

1. Reader for the contactless reading of transponder data via an electromagnetic field, having a read antenna (10) which is connected to a receiving circuit (12) for demodulating and processing the transponder data, wherein the reader comprises a digital signal processor (16) which is connected to the receiving circuit (12) or forms part of the receiving circuit (12), which digital signal processor evaluates a frequency spectrum of the received signals, **characterised in that** a display signal which represents an amplitude/time curve and/or a frequency spectrum of the received signals is provided at a display signal output of the digital signal processor (16), and **in that** an optical display device integrated in the reader for the amplitude/time curve and/or the frequency spectrum of the received signals, and/or an interface (34) integrated in the reader for the connection of an external optical display device (72) for the amplitude/time curve and/or the frequency spectrum of the received signals, is connected to the display signal output of the digital signal processor (16).

2. Reader according to claim 1, **characterised in that** a signal path for processing the transponder data and a signal path for generating a display signal which represents an amplitude/time curve and/or a frequency spectrum of the received signals are jointly routed via the same read antenna (10).

3. Reader according to claim 1 or 2, **characterised in that** a signal path for processing the transponder data and a signal path for generating a display signal which represents an amplitude/time curve and/or a frequency spectrum of the received signals are jointly routed via the same receiving circuit (12).

4. Reader according to one of claims 1 to 3, **characterised in that** the frequency of the electromagnetic field lies in a range between 8 kHz and 2.54 GHz.

5. Reader according to one of claims 1 to 4, **characterised in that** the frequency of the electromagnetic field lies in the LF range between 100 kHz and 150 kHz.

6. Reader according to one of claims 1 to 4, **characterised in that** the frequency of the electromagnetic field lies in the HF range at 13 MHz.

7. Reader according to one of claims 1 to 4, **characterised in that** the frequency of the electromagnetic field lies in the UHF range at 900 MHz.

8. Reader according to one of claims 1 to 4, **characterised in that** the frequency of the electromagnetic field lies in the SHF range at 2.54 GHz.

9. Reader according to one of claims 1 to 8, **characterised in that** the integrated signal processor (16), as part of the receiving circuit, can be switched in a program-controlled manner between a data processing procedure and a display signal procedure.

10. Reader according to one of claims 1 to 9, **characterised in that** the display signal additionally comprises at least one detection threshold which is generated by the integrated signal processor and which can be displayed on the display device as a two-dimensional function in addition to the amplitude/time curve of the received signals.

11. Reader according to one of claims 1 to 9, **characterised in that** the display signal additionally comprises at least one detection threshold which is generated by the integrated signal processor and which can be displayed on the display device (72) as a two-dimensional function in addition to the frequency spectrum of the received signals.

12. Reader according to claim 10 or 11, **characterised in that** the display signal additionally comprises numerical data which is generated by the integrated signal processor (16) and assigned to the detection threshold and can be displayed on the display device (72) together with the two-dimensional function of the detection threshold.

13. Reader according to claim 12, **characterised in that** the numerical data contains information such as range, detection probability, error probability or error frequency.

14. Reader according to one of claims 1 to 13, **characterised in that** the signal processor (16) additionally comprises at least one controllable digital filter (36) for the received signals.

15. Reader according to one of claims 1 to 14, **characterised in that** additionally at least one interfering signal detection sensor (20) is connected to the receiving circuit or to a further receiving circuit (38), and **in that** signal paths from the read antenna (10) and from the interfering signal detection sensor (20) are coupled to a compensation circuit (40) for the opposite-phase weighted linking of the signals from the read antenna (10) and from the interfering signal detection sensor (20).

16. Reader according to claim 15, **characterised in that** the compensation circuit (40) is formed by the digital signal processor (16), wherein the compensation takes place in a program-controlled manner using mathematical methods.

17. Reader according to one of claims 1 to 16, **characterised in that** the reader is connected directly or via a network to a control circuit, to which further readers are also connected, and **in that** readers with mutually interfering read antennas can alternately be activated and deactivated for reading transponder data by the control circuit via control signals in the time division multiplexing method.

18. Reader according to one of claims 1 to 17, **characterised in that** the reader is connected directly or via a network to a control circuit, to which further readers are also connected, and **in that** readers which are deactivated for reading transponder data can be activated as interference detection sensors by the control circuit and can be coupled to readers which are activated for reading transponder data, and the signals received by the readers activated as interference detection sensors are also fed to the compensation circuit.

19. Reader according to one of claims 1 to 18, **characterised in that** the reader comprises a scanner which is connected to the digital signal processor or forms part of the digital signal processor, for generating a display signal comprising a spectrum of occupied and unoccupied transponder channels as well as interference sources and displaying said display signal on the optical display device.

20. Reader according to one of claims 15 to 19, **characterised in that** the reader comprises a scanner which is connected to the digital signal processor or forms part of the digital signal processor, for identifying interfering signals according to amplitude, frequency and phase and controlling the compensation circuit for compensating transponder data which is superposed by interference.

21. Reader according to claim 20, **characterised in that** a display signal of interference-suppressible and non-interference-suppressible transponder channels can be generated by the digital signal processor and displayed on the optical display device.

## Revendications

1. Lecteur servant à lire sans contact des données de transpondeur par l'intermédiaire d'un champ électromagnétique avec une antenne de lecture (10) reliée à un circuit de réception (12) pour la démodulation et le traitement des données du transpondeur, le lecteur comprenant un processeur de signaux numérique (16) relié au circuit de réception (12) ou formant partie intégrante de celui-ci, processeur, qui évalue un spectre de fréquences des signaux reçus, **caractérisé en ce qu'**un signal rapporteur représentant une caractéristique amplitude/temps et/ou un spectre de fréquences des signaux reçus existe à la sortie de signal rapporteur du processeur de signaux numérique (16) et **en ce qu'**un dispositif d'affichage visuel pour la caractéristique amplitude/temps et/ou pour le spectre de fréquences des signaux reçus, qui est intégré dans le lecteur, est raccordé à la sortie du signal rapporteur et/ou qu'une interface (34) pour le raccordement d'un dispositif d'affichage visuel externe (72), qui est intégrée dans le lecteur, est raccordée à la sortie du signal rapporteur.

2. Lecteur suivant la revendication 1, **caractérisé en ce qu'**une voie de signal pour le traitement des données du transpondeur et une voie de signal pour la production d'un signal rapporteur représentant une caractéristique amplitude/temps et/ou un spectre de fréquences des signaux reçus passent toutes deux par la même antenne de lecture (10).

3. Lecteur suivant la revendication 1 ou 2, **caractérisé en ce qu'**une voie de signal pour le traitement des données du transpondeur et une voie de signal pour la production d'un signal rapporteur représentant une caractéristique amplitude/temps et/ou un spectre de fréquences des signaux reçus passent toutes deux par le même circuit de réception (12).

4. Lecteur suivant une des revendications 1 à 3, **caractérisé en ce que** la fréquence du champ électromagnétique se situe dans la plage entre 8 kHz et 2,54 GHz.

5. Lecteur suivant une des revendications 1 à 4, **caractérisé en ce que** la fréquence du champ électromagnétique se situe dans la gamme des basses fréquences entre 100 kHz et 150 kHz.

6. Lecteur suivant une des revendications 1 à 4, **caractérisé en ce que** la fréquence du champ électromagnétique se situe dans la plage des hautes fréquences aux alentours de 13 MHz.

7. Lecteur suivant une des revendications 1 à 4, **caractérisé en ce que** la fréquence du champ électromagnétique se situe dans la gamme des UHF aux alentours de 900 MHz.

8. Lecteur suivant une des revendications 1 à 4, **caractérisé en ce que** la fréquence du champ électromagnétique se situe dans la gamme des SHF aux alentours de 2,54 GHz.

9. Lecteur suivant une des revendications 1 à 8, **caractérisé en ce que** le processeur de signaux intégré (16) peut être commuté, en tant que partie intégrante du circuit de réception, entre une procédure de traitement de données et une procédure de signal rapporteur, la commutation étant commandée par programme.

10. Lecteur suivant une des revendications 1 à 9, **caractérisé en ce que** le signal rapporteur comprend, en plus, au moins un seuil de détection, généré par le processeur de signaux intégré, qui peut être représenté sur le dispositif d'affichage comme fonction à deux dimensions, en plus de la caractéristique amplitude/temps des signaux reçus.

11. Lecteur suivant une des revendications 1 à 9, **caractérisé en ce que** le signal rapporteur comprend, en plus, au moins un seuil de détection, généré par le processeur de signaux intégré, qui peut être représenté sur le dispositif d'affichage (72) comme fonction à deux dimensions, en plus du spectre de fréquences.

12. Lecteur suivant la revendication 10 ou 11, **caractérisé en ce que** le signal rapporteur comprend, en plus, une indication chiffrée, générée par le processeur de signaux intégré (16) et affectée au seuil de détection, indication chiffrée qui peut être représentée sur le dispositif d'affichage (72) conjointement avec la fonction à deux dimension du seuil de détection.

13. Lecteur suivant la revendication 12, **caractérisé en ce que** l'indication chiffrée contient des informations telles que portée, probabilité de détection, probabilité d'erreur ou fréquence d'erreur.

14. Lecteur suivant une des revendications 1 à 13, **caractérisé en ce que** le processeur de signaux (16) comprend, en plus, au moins un filtre numérique (36) pouvant être commandé pour les signaux reçus.

15. Lecteur suivant une des revendications 1 à 14, **caractérisé en ce qu'**en plus, un capteur de signaux parasites (20) au moins est raccordé au circuit de réception ou à un circuit de réception supplémentaire (38) et que des voies de signaux de l'antenne de lecture (10) et du capteur de signaux parasites (20) sont couplées à un circuit de compensation (40) pour la combinaison pondérée, en opposition de phase, des signaux de l'antenne de lecture (10) et du capteur de signaux parasites (20).

16. Lecteur suivant la revendication 15, **caractérisé en ce que** le circuit de compensation (40) est formé par le processeur de signaux numérique (16), la compensation ayant lieu par des méthodes mathématiques de façon commandée par programme.

17. Lecteur suivant une des revendications 1 à 16, **caractérisé en ce que** le lecteur est relié directement ou via un réseau à un circuit de commande, auquel sont raccordés également d'autres lecteurs et **en ce que** des lecteurs, dont les antennes de lecture se brouillent réciproquement, peuvent être alternativement activées ou désactivées par le circuit de commande, en multiplex à division de temps, via des signaux de commande, pour la lecture des données du transpondeur.

18. Lecteur suivant une des revendications 1 à 17, **caractérisé en ce que** le lecteur est relié directement ou via un réseau à un circuit de commande, auquel sont raccordés également des lecteurs supplémentaires et **en ce que** des lecteurs inactifs pour la lecture des données du transpondeur peuvent être activés, grâce au circuit de commande, comme capteurs de signaux parasites et couplés à des lecteurs actifs pour la lecture des données du transpondeur et **en ce que** les signaux reçus par les lecteurs activés comme capteurs de signaux parasites sont également amenés au circuit de compensation.

19. Lecteur suivant une des revendications 1 à 18, **caractérisé en ce que** le lecteur comprend un scanner, relié au processeur de signaux numérique ou faisant partie intégrante de celui-ci, pour la production d'un signal rapporteur comprenant un spectre de canaux occupés et inoccupés du transpondeur, ainsi que des sources de parasites et pour la représentation sur un dispositif d'affichage visuel.

20. Lecteur suivant une des revendications 15 à 19, **caractérisé en ce que** le lecteur comprend un scanner, relié au processeur de signaux numérique ou faisant partie intégrante de celui-ci, pour la détermination de signaux parasites selon l'amplitude, la fréquence et la phase et pour la commande du circuit de compensation afin de compenser les parasites superposés aux données du transpondeur.

21. Lecteur suivant la revendication 20, **caractérisé en ce qu'** un signal rapporteur de ceux des canaux de transpondeur pouvant être déparasités et de ceux ne pouvant pas être déparasités peut être généré et représenté sur le dispositif d'affichage visuel grâce au processeur numérique.
